(19) Europäisches Patentamt
European Patent Office
Office européen des brevets

(11) **EP 4 700 059 A1**

(12) **EUROPEAN PATENT APPLICATION**
published in accordance with Art. 153(4) EPC

(43) Date of publication:
**25.02.2026 Bulletin 2026/09**

(21) Application number: **24792578.7**

(22) Date of filing: **10.04.2024**

(51) International Patent Classification (IPC):
***C08G 18/65*** *(2006.01)* ***C08G 18/32*** *(2006.01)*
***C08G 18/61*** *(2006.01)* ***C08G 18/73*** *(2006.01)*
***C08G 18/75*** *(2006.01)*

(52) Cooperative Patent Classification (CPC):
**C08G 18/32; C08G 18/61; C08G 18/65; C08G 18/73; C08G 18/75**

(86) International application number:
**PCT/JP2024/014510**

(87) International publication number:
**WO 2024/219303 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023 JP 2023066803**
**29.09.2023 JP 2023170042**
**05.03.2024 PCT/JP2024/008282**

(71) Applicant: **SHIN-ETSU CHEMICAL CO., LTD.**
**Tokyo 1000005 (JP)**

(72) Inventors:
- **ANDO, Yuji**
  **Annaka-shi, Gunma 379-0224 (JP)**
- **SAKUTA, Koji**
  **Annaka-shi, Gunma 379-0224 (JP)**
- **MEGURIYA, Noriyuki**
  **Annaka-shi, Gunma 379-0224 (JP)**

(74) Representative: **Mewburn Ellis LLP**
**Aurora Building**
**Counterslip**
**Bristol BS1 6BX (GB)**

# (54) POLYUREA POLYMER, POLYUREA COMPOSITION, AND METHODS FOR PRODUCING SAME

(57) Provided are: a polyurea polymer that is a reaction product of
(a) an amino-group-containing organopolysiloxane represented by general formula (1) which has an amine equivalent of from more than 1,500 g/mol to 7,500 g/mol

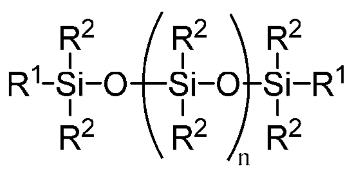

(1)

(In the formula, $R^1$ each independently is a C1-20 monovalent hydrocarbon group having a primary or secondary amino group, $R^2$ each independently is a C1-20 monovalent hydrocarbon group, and n is a value that satisfies the abovementioned amine equivalent.),
(b) an aliphatic diisocyanate compound having two isocyanate groups per molecule, and
(c) an amine compound having two or more amino groups per molecule; and
a polyurea composition that contains this polymer and an alcohol having one secondary hydroxyl group or tertiary hydroxyl group per molecule.

EP 4 700 059 A1

## Description

### TECHNICAL FIELD

The present invention relates to a polyurea polymer, a polyurea composition, and methods for preparing these.

### BACKGROUND ART

Polyurea resins can be processed into various shapes on account of their tensile strength, flex resistance, abrasion resistance and oil resistance. Also, depending on how they are formulated, polyurea resins can be made thermoplastic or thermosetting.

Polyamines, isocyanates, chain extenders and the like are used as the starting materials for polyurea resins, although the copolymerization of reactive siloxanes such as amino group-containing siloxanes has recently been proposed for polyamines (Patent Document 1). Patent Document 1 describes siloxane-modified polyurea fibers and a method for their production.

However, when a diamine is used as the chain extender mentioned in Patent Document 1 and the reaction is carried out in the absence of a solvent, the reaction mixture hardens and cannot be stirred, resulting in a heterogeneous polymer. While polymerization with addition of the solvent mentioned in Patent Document 1 is also possible, solvents capable of maintaining a molten state during polymerization have been highly polar solvents such as DMF and DMAc. Also, as noted in Patent Document 1, because alcohol solvents (monoalcohols) are used as isocyanate end-stopping reagents, they cannot be used as the solvent, which is also why the high-boiling solvents DMF and DMAc have been used.

Yet, given that highly polar solvents have high boiling points, poor volatility and are difficult to use, there is a strong desire for alternatives to these solvents. Although it is possible, following synthesis with DMF or DMAc as the solvent, to replace this solvent with a low-boiling solvent, doing so takes time and effort and is uneconomical. Hence, there exists a need to be able to carry out synthesis with a low-boiling solvent from the stage of synthesis.

Patent Document 2 discloses a method that uses a chlorinated solvent as the reaction solvent. However, because the utilization and disposal of chlorinated solvents are subject to various regulations, they have been difficult to use.

### PRIOR ART DOCUMENTS

### PATENT DOCUMENTS

Patent Document 1: WO 2016/158967 A1
Patent Document 2: JP-A S63-3029

### SUMMARY OF INVENTION

### TECHNICAL PROBLEM

The present invention was arrived at in light of the above circumstances. An object of the invention is to provide a polyurea polymer which is soluble in a volatile, low-boiling solvent and which moreover has a low compression set. Additional objects are to provide a polyurea composition containing such a polyurea polymer, and methods for preparing the polyurea polymer and the polyurea composition.

### SOLUTION TO PROBLEM

The inventors have conducted intensive investigations aimed at achieving the above objects. As a result, they have discovered that a polyurea polymer obtained from an organopolysiloxane having a given amine equivalent weight, an aliphatic diisocyanate compound and an amine compound having two or more amino groups per molecule can resolve the above problems. In addition, they have also found that this polyurea polymer can be synthesized using a secondary alcohol or a tertiary alcohol as the solvent. These discoveries ultimately led to the present invention.

Accordingly, the invention provides:

1. A polyurea polymer that is a reaction product of:

(a) an amino group-containing organopolysiloxane of general formula (1) below which has an amine equivalent weight of more than 1,500 g/mol and up to 7,500 g/mol

[Chem. 1]

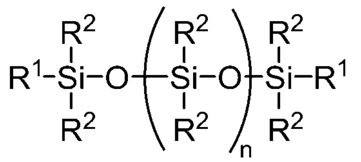

(1)

(wherein each $R^1$ is independently a monovalent hydrocarbon group of 1 to 20 carbon atoms which has a primary or secondary amino group, each $R^2$ is independently a monovalent hydrocarbon group of 1 to 20 carbon atoms, n is a value that satisfies the amine equivalent weight, and the siloxane units within parentheses may be bonded in any order),
(b) an aliphatic diisocyanate compound having two isocyanate groups per molecule, and
(c) an amine compound having two or more amino groups per molecule (exclusive of component (a));

2. The polyurea polymer of 1 above, wherein component (c) is a compound of formula (4) below

$$H_2N\text{-}R\text{-}NH_2 \qquad (4)$$

(wherein R is a substituted or unsubstituted divalent hydrocarbon group of 1 to 20 carbon atoms);
3. A method for preparing the polyurea polymer of 1 or 2 above, which method includes the step of reacting components (a) to (c) in an alcohol having one secondary hydroxyl group or tertiary hydroxyl group per molecule to form a polyurea polymer;
4. A polyurea composition which includes:

(A) the polyurea polymer of 1 or 2 above, and
(B) an alcohol having one secondary hydroxyl group or tertiary hydroxyl group per molecule;

5. The polyurea composition of 4 above, wherein the composition is a solution of the polyurea polymer of component (A) dissolved in the alcohol of component (B); and
6. A method for preparing the polyurea composition of 5 above, which method includes the step of reacting components (a) to (c) in the alcohol of component (B) to synthesize the polyurea polymer of component (A), thereby obtaining a polyurea composition which is a solution of the polyurea polymer of component (A) dissolved in the alcohol of component (B).

## ADVANTAGEOUS EFFECTS OF INVENTION

The polyurea polymer of the invention is more soluble than conventional polyurea polymers in volatile, low-boiling solvents. Moreover, the inventive polyurea polymer has a low compression set, making it suitable for use as a sealing material.

## DESCRIPTION OF EMBODIMENTS

The invention is described in detail below.

### Polyurea Polymer

[1] The polyurea polymer of the invention is a polymer obtained by reacting components (a) to (c) below:

(a) an amino group-containing organopolysiloxane of general formula (1) below which has an amine equivalent weight of more than 1,500 g/mol and up to 7,500 g/mol,
(b) an aliphatic diisocyanate compound having two isocyanate groups per molecule, and
(c) an amine compound having two or more amino groups per molecule.

[Component (a)]

Component (a) used in this invention is an amino group-containing organopolysiloxane of general formula (1) below which has an amine equivalent weight of more than 1,500 g/mol and up to 7,500 g/mol. It serves as the chief constituent of the polyurea polymer of the invention.

[Chem. 2]

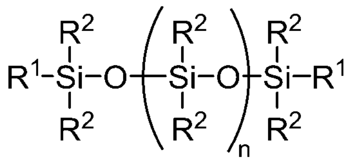

(1)

In formula (1), each $R^1$ is independently a monovalent hydrocarbon group of 1 to 20 carbon atoms which has a primary or secondary amino group.

The monovalent hydrocarbon group of 1 to 20 carbon atoms which has a primary or secondary amino group and is represented by $R^1$ is exemplified by groups of formula (2) below.

$-R^3NHR^4$ (2)

In formula (2), $R^3$ is a divalent hydrocarbon group of 1 to 20 carbon atoms, may be linear, branched or cyclic, and is exemplified by alkylene groups of 1 to 20, preferably 1 to 10, carbon atoms; cycloalkylene groups of 3 to 20, preferably 3 to 10, carbon atoms; alkenylene groups of 2 to 20, preferably 2 to 10, carbon atoms; arylene groups of 6 to 20, preferably 6 to 10, carbon atoms; and aralkylene groups of 7 to 20, preferably 7 to 10, carbon atoms.

Specific examples of the divalent hydrocarbon group of $R^3$ include alkylene groups such as methylene, ethylene, trimethylene, propylene, tetramethylene, pentamethylene, hexamethylene, heptamethylene, octamethylene, nonamethylene, decamethylene, dodecamethylene, tetradecamethylene, hexadecamethylene, octadecamethylene, nonadecamethylene and eicosadecylene groups; cycloalkylene groups such as cyclopentylene and cyclohexylene groups; alkenylene groups such as vinylene and propenylene groups; arylene groups such as phenylene, methylphenylene and naphthylene groups; and aralkylene groups such as benzylidene and phenethylene groups.

Of these, $R^3$ is preferably an alkylene group of 1 to 10 carbon atoms; more preferably a methylene, ethylene, trimethylene, propylene, tetramethylene, pentamethylene, hexamethylene, heptamethylene, octamethylene, nonamethylene or decamethylene group; even more preferably a methylene, ethylene, trimethylene or propylene group; and especially an ethylene or trimethylene group.

$R^4$ is a hydrogen atom or a monovalent hydrocarbon group of 1 to 20 carbon atoms. The monovalent hydrocarbon group of 1 to 20 carbon atoms may be linear, branched or cyclic, and is exemplified by alkyl groups of 1 to 20, preferably 1 to 10, carbon atoms; cycloalkyl groups of 3 to 20, preferably 3 to 10, carbon atoms; alkenyl groups of 2 to 20, preferably 2 to 10, carbon atoms; aryl groups of 6 to 20, preferably 6 to 10, carbon atoms; and aralkyl groups of 7 to 20, preferably 7 to 10, carbon atoms.

Specific examples of the monovalent hydrocarbon group of $R^4$ include alkyl groups such as methyl, ethyl, propyl, butyl, pentyl, hexyl, heptyl, octyl, nonyl, decyl, dodecyl, tetradecyl, hexadecyl and octadecyl groups; cycloalkyl groups such as cyclopentyl and cyclohexyl groups; alkenyl groups such as vinyl and allyl groups; aryl groups such as phenyl, tolyl and naphthyl groups; and aralkyl groups such as benzyl and phenethyl groups.

Of these, $R^4$ is preferably a hydrogen atom or an alkyl group of 1 to 6 carbon atoms; more preferably a hydrogen atom or a methyl, ethyl or propyl group; and even more preferably a hydrogen atom or a methyl group.

Specific examples of the group of above formula (2) include aminomethyl, 2-aminoetha-1-yl, 2-aminopropa-1-yl, 3-aminopropa-1-yl, 2-aminobuta-1-yl, 3-aminobuta-1-yl, 4-aminobuta-1-yl, N-methylaminomethyl, N-methyl-2-aminoetha-1-yl, N-methyl-2-aminopropa-1-yl, N-methyl-3-aminopropa-1-yl, N-methyl-2-aminobuta-1-yl, N-methyl-3-aminobuta-1-yl, N-methyl-4-aminobuta-1-yl, N-ethylaminomethyl, N-ethyl-2-aminoetha-1-yl, N-ethyl-2-aminopropa-1-yl, N-ethyl-3-aminopropa-1-yl, N-ethyl-2-aminobuta-1-yl, N-ethyl-3-aminobuta-1-yl, N-ethyl-4-aminobuta-1-yl, N-butylaminomethyl, N-butyl-2-aminoetha-1-yl, N-butyl-2-aminopropa-1-yl, N-butyl-3-aminopropa-1-yl, N-butyl-2-aminobuta-1-yl, N-butyl-3-aminobuta-1-yl, N-butyl-4-aminobuta-1-yl and 8-aminoocta-1-yl groups.

Of these, aminomethyl, 2-aminoetha-1-yl, 3-aminopropa-1-yl and 8-aminoocta-1-yl groups are preferred; the 3-aminopropa-1-yl group is more preferred.

In formula (1), each $R^2$ is independently a monovalent hydrocarbon group of 1 to 20 carbon atoms. Specific

examples of the monovalent hydrocarbon groups represented by $R^2$ include the same groups as those mentioned for $R^4$. Of these, $R^2$ is preferably an alkyl group of 1 to 6 carbon atoms, an aryl group of 6 to 8 carbon atoms or a vinyl group; more preferably a methyl, ethyl, propyl, butyl, phenyl or vinyl group; and even more preferably a methyl or phenyl group.

The amine equivalent weight of component (a) is from 1,500 to 7,500 g/mol, preferably more than 1,500 g/mol and up to 7,500 g/mol, more preferably from 1,600 to 7,500 g/mol, even more preferably from 1,700 to 7,000 g/mol, still more preferably from 1,900 to 6,500 g/mol, and especially from 2,000 to 5,500 g/mol. This amine equivalent weight represents the weight of component (a) per mole of amino groups in component (a). At an amine equivalent weight below 1,500 g/mol, a good balance between the hardness and compression set of the resulting polymer cannot be obtained; at more than 7,500 g/mol, an increased strength is difficult to achieve. The amine equivalent weight is a value measured by the subsequently described neutralization titration method.

The subscript 'n' is a value that satisfies the above range in the amine equivalent weight. Specifically, the range of n is determined by the types of $R^1$ and $R^2$ substituents. For example, when all instances of $R^2$ are methyl groups, n is preferably a number from 37 to 199, more preferably a number from 42 to 186, and even more preferably a number from 48 to 172. In formula (1), the siloxane units within parentheses may be bonded in any order.

Specific examples of the organopolysiloxane of formula (1) include, but are not limited to, those mentioned below. In the following formulas, Me represents a methyl group and Ph represents a phenyl group. Of these, organopolysiloxanes of formulas (1-1) to (1-3) are preferred, and organopolysiloxanes of formula (1-1) or (1-3) are more preferred.

[Chem. 3]

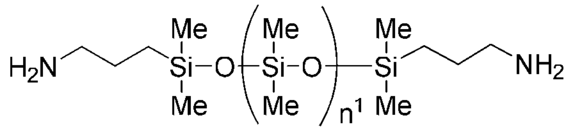
(1-1)

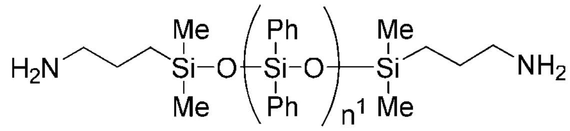
(1-2)

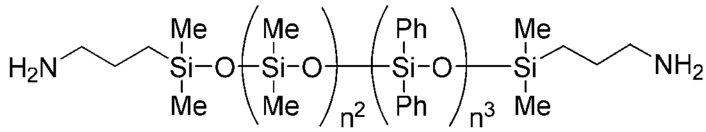
(1-3)

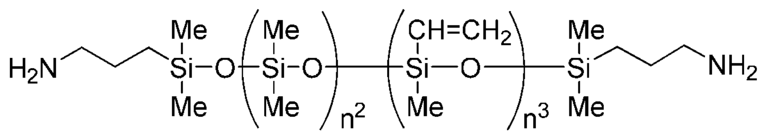
(1-4)

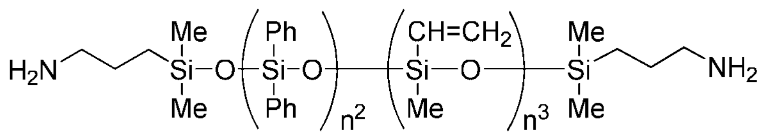
(1-5)

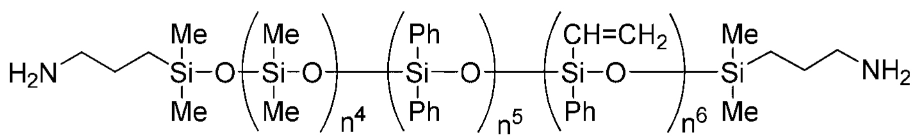
(1-6)

In the above formulas, $n^1$ to $n^6$ are each numbers of 1 or more, with $n^1 = n$, $n^2+n^3 = n$, and $n^4+n^5+n^6 = n$. The recurring units may be arranged in any order, such as blocks or randomly. Component (a) may be a single organopolysiloxane used alone, or two or more may be used together.

These organopolysiloxanes may be prepared by a hitherto known method. For example, synthesis by reacting an

amino group-containing disiloxane with a cyclic siloxane having any desired substituents under acidic or alkaline conditions is possible. Alternatively, a commercial product may be used.

[Component (b)]

Component (b) used in the invention is an aliphatic diisocyanate compound having two isocyanate groups on the molecule. It is an ingredient that reacts with above component (a) to form the polyurea polymer of the invention.
Component (b) is not particularly limited, so long as it has two isocyanate groups per molecule. Examples include compounds of formula (3) below

OCN-Q-NCO (3)

(wherein Q is a substituted or unsubstituted divalent hydrocarbon group of 1 to 20 carbon atoms).
The divalent hydrocarbon group of 1 to 20 carbon atoms represented by Q may be linear, branched or cyclic, and is exemplified by the same groups as those mentioned for $R^3$. Of these, Q is preferably an alkylene group of 1 to 20 carbon atoms or a cycloalkylene group of 3 to 20 carbon atoms. A combination of these groups may be used. At least some of the hydrogen atoms on these groups may be replaced with other substituents. Examples of the other substituents include alkyl groups of 1 to 3 carbon atoms, such as methyl and ethyl groups.
Specific examples of the isocyanate compound of formula (3) include diisocyanate compounds such as 1,6-hexamethylene diisocyanate, dodecamethylene diisocyanate, trimethylhexamethylene diisocyanate, 1,3-cyclohexylene diisocyanate, 1,4-cyclohexylene diisocyanate, tetramethylxylylene diisocyanate (TMXDI), hydrogenated xylylene diisocyanate, lysine diisocyanate, isophorone diisocyanate, 4,4'-dicyclohexylmethane diisocyanate and 3,3'-dimethyl-4,4'-dicyclohexylmethane diisocyanate.
Of these, 1,6-hexamethylene diisocyanate, hydrogenated xylylene diisocyanate, 1,4-cyclohexylene diisocyanate, isophorone diisocyanate and 4,4'-dicyclohexylmethane diisocyanate are preferred. Isophorone diisocyanate and 4,4'-dicyclohexylmethane diisocyanate are more preferred.
Component (b) may be a single aliphatic diisocyanate compound used alone, or two, three or more such compounds may be used in admixture.
The amount of component (b) included is not particularly limited, although it is preferably from 1 to 50 parts by weight, and more preferably from 5 to 30 parts by weight, per 100 parts by weight of component (a).

[Component (c)]

Component (c) in the invention is an amine compound having two or more amino groups per molecule, and is an ingredient that acts as a chain extender or crosslinking agent for the polyurea polymer of the invention.
The number of amino groups on the amine compound of component (c) is 2 or more, preferably from 2 to 4, more preferably 2 to 3, and even more preferably 2, per molecule.
Component (c) is a compound other than component (a) and, although not particularly limited so long as it has two or more functional groups per molecule, is exemplified by compounds of formula (4) below.

$H_2N$-R-$NH_2$ (4)

In formula (4), R is a substituted or unsubstituted divalent hydrocarbon group of 1 to 20 carbon atoms which may be linear, branched and cyclic, and is exemplified by the same groups as those mentioned for $R^3$. A combination of these groups may be used. At least some of the hydrogen atoms may be replaced with other substituents. Examples of the other substituents include alkyl groups of 1 to 3 carbon atoms, such as methyl and ethyl groups; halogen atoms such as chlorine and bromine atoms; and heteroatom-containing groups such as oxygen and sulfur atoms.
Specific examples of the amine compound of formula (4) include ethylenediamine, 1,2-propanediamine, 1,3-propanediamine, 1,4-butanediamine, 1,3-butanediamine, 1,2-butanediamine, 1,5-pentanediamine, 1,4-pentanediamine, 1,3-pentanediamine, 1,2-pentanediamine, 2,5-pentanediamine, 2,4-pentanedimaine, 2,3-pentanediamine, 1,6-hexanediamine, 1,5-hexanediamine, 1,4-hexanediamine, 1,3-hexanediamine, 1,2-hexanediamine, 2,6-hexanediamine, 2,5-hexanediamine, 2,4-hexanediamine, 2,3-hexanediamine, 1,8-octanediamine, 1,10-decanediamine, 1,12-dodecanediamine, 2,2,4-trimethylhexamethylenediamine, 2,4,4-trimethylhexamethylenediamine, diaminotoluene, diphenylmethanediamine, 3,3'-dichloro-4,4'-diaminodiphenylmethane, 4,4'-methylenebis(2,6-diethylaniline), 4,4'-methylenebis(2-ethyl-6-methylaniline), 4,4'-methylenebis(aminocyclohexane), diethylmethylbenzenediamine, 4,4'-methylenedianiline, 4,6-diethyl-2-methyl-1,3-phenylenediamine, 2-methyl-4,6-bis(methylthio)-1,3-benzenediamine, 4-methyl-2,6-bis(methylthio)-1,3-benzenediamine, bis(4-amino-2,3-dichlorophenyl)methane (TCDAM), trimethylenebis(4-aminobenzoate), isophoronediamine and 4,4'-diaminodicyclohexylmethane.

Cyclic diamines such as piperazine, and triamines such as diethylenetriamine, bis(hexamethylene)triamine and trisaminoethylamine may also be used.

Of these, isophoronediamine, 1,6-hexanediamine, 1,8-octanediamine, 1,10-decanediamine, 1,12-dodecanediamine, piperazine, 2,2,4-trimethylhexamethylenediamine, 2,4,4-trimetylhexamethylenediamine, 4,4'-methylenebis(aminocyclohexane), 4,4'-methylenedianiline and 4,4'-diaminodicyclohexylmethane are preferred.

One of these compounds may be used alone, or two, three or more may be used in admixture.

The component (c) content is not particularly limited, but is preferably from 1 to 20 parts by weight, more preferably from 3 to 15 parts by weight, and even more preferably from 3 to 10 parts by weight, per 100 parts by weight of component (a).

The content of components (a) to (c) is preferably an amount such that the ratio expressed as {total number of isocyanate groups included in component (b)}/{total number of amino groups included in components (a) and (c)} is preferably from 0.7 to 1.4, more preferably from 0.8 to 1.2, even more preferably from 0.9 to 1.1, and still more preferably from 0.95 to 1.05.

The polyurea polymer of the invention may include also other constituents, provided that this does not detract from the advantageous effects of the invention. Such other constituents include polyols (diols) and catalysts.

Specific examples of polyols (diols) include polyether polyols, polyester polyols, polycarbonate polyols, ethylene glycol, 1,2-propanediol, 1,3-propanediol, 1,4-butanediol, 1,3-butanediol, 1,2-butanediol, 1,5-pentanediol, 1,4-pentanediol, 1,3-pentanediol, 1,2-pentanediol, 2,5-pentanediol, 2,4-pentanediol, 2,3-pentanediol, 1,6-hexanediol, 1,5-hexanediol, 1,4-hexanediol, 1,3-hexanediol, 1,2-hexanediol, 2,6-hexanediol, 2,5-hexanediol, 2,4-hexanediol, 2,3-hexanediol, neopentyl glycol and methylpentanediol. Additional examples include trifunctional alcohols such as glycerol and trimethylolpropane, tetrafunctional alcohols such as pentaerythritol and $\alpha$-methylglycoside, hexafunctional alcohols such as sorbitol and sucrose, and alkanolamines such as monoethanolamine, diethanolamine and triethanolamine.

Specific examples of catalysts include amine compounds such as triethylamine, N,N-dimethylcyclohexylamine, N,N,N',N'-tetramethylethylenediamine, N,N,N',N'-tetramethylhexamethylenediamine, N,N,N',N",N"-pentamethyldiethylenetriamine, N,N,N',N"-N"-pentamethyldipropylenetriamine, triethylenediamine, N-methyl-N'-(2-dimethylaminoethyl)piperazine, N-ethylmorpholine, 1,2-dimethylimidazole, dimethylethanolamine, dimethylaminoethoxyethanol, N,N,N'-trimethylaminoethylethanolamine, N-methyl-N'-(2-hydroxyethyl)piperazine and bis(2-dimethylaminoethyl) ether; organotitanium compounds such as tetraisopropoxytitanium, tetra-n-butoxytitanium, tetra-t-butoxytitanium, titanium diisopropoxide bis(acetylacetonate), titanium tetra-2-ethylhexoxide and titanium diisopropoxide bis(ethyl acetoacetate); organozirconium compounds such as zirconium tetrabutoxide, zirconium tetrapropoxide, tetrakis(2,4-pentanedionato)zirconium and zirconium dibutoxybis(ethyl acetoacetate); and organotin compounds such as dibutyltin diacetate and dibutyltin dilaurate.

[2] Method for Preparing Polyurea Polymer

The method for synthesizing the polyurea polymer of the invention is not particularly limited. A process that has hitherto been used to prepare polyurea resins may be used, such as the prepolymer process or the one-shot process.

In the prepolymer process, component (a) and component (b) are reacted, following which component (c) is added and reacted. When component (a) and component (b) are reacted, either component (b) may be added to component (a) or component (a) may be added to component (b), although it is preferable to add component (b) to component (a).

The above reaction may be carried out in the absence of a solvent, although it is preferable to use a solvent. The solvent may be added to component (a) or may be added to component (b). Alternatively, it may be added after mixing together components (a) and (b), or components (a) and (b) may be added to the solvent. Moreover, when component (c) is added following the reaction of component (a) with component (b), the solvent may be added at the same time as component (c) or may be added before adding component (c) or after adding and reacting component (c). Addition of the above ingredients may be carried out dropwise or all at once.

The reaction temperature, although not particularly limited, is preferably between 10°C and 150°C, more preferably between 15°C and 100°C, and even more preferably between 20°C and 60°C. The reaction time also is not particularly limited, and is preferably from 10 minutes to 20 hours, more preferably from 10 minutes to 15 hours, even more preferably from 10 minutes to 10 hours, and still more preferably from 0.5 to 5 hours.

As for the one-shot process, this is a process that reacts component (a), component (b) and component (c) at the same time.

The reaction time, although not particularly limited, is preferably between 10°C and 150°C, more preferably between 15°C and 100°C, and even more preferably between 20°C and 60°C. The reaction time also is not particularly limited, and is preferably from 10 minutes to 10 hours, and more preferably from 0.5 to 5 hours.

In this invention, it is preferable to use the prepolymer process, and more preferable to use the prepolymer process and react components (a) to (c) in a solvent. The method of mixing together component (a) and the solvent,

subsequently adding and reacting component (b), and then adding and further reacting component (c) is more preferred. The other ingredients may be added at any time to components (a) to (c).

Solvents that may be used in the above reaction are not particularly limited, although an alcohol having one secondary hydroxyl group or tertiary hydroxyl group per molecule is preferred. Such alcohols are not particularly limited so long as they have one secondary hydroxyl group or tertiary hydroxyl group per molecule. Examples include isopropyl alcohol, 2-butanol, 2-methyl-2-propanol, 2-pentanol, 3-pentanol, 2-methyl-2-butanol, 3-methyl-2-butanol, cyclohexanol, 1-methoxy-2-propanol, 2-heptanol, 3-heptanol, 4-heptanol and 1-ethoxy-2-propanol.

Of these, isopropyl alcohol, 2-methyl-2-butanol, 2-butanol and 1-methoxy-2-propanol are preferred.

The boiling point of the solvent is preferably 200°C or less, more preferably between 50°C and 180°C, even more preferably between 60°C and 150°C, and still more preferably between 70°C and 120°C.

When a solvent is used, the amount of addition is preferably at least 10 parts by weight, more preferably at least 40 parts by weight, even more preferably at least 100 parts by weight, and still more preferably at least 200 parts by weight, per 100 parts by weight of components (a) to (c) and the other ingredients combined. Although there is no particular upper limit, the amount of addition is preferably not more than 300 parts by weight, and more preferably not more than 250 parts by weight.

Following reaction completion, the polyurea polymer of the invention can be obtained by drying at preferably between 20°C and 200°C, and more preferably between 20°C and 150°C, for a period of from 1 to 30 hours, and more preferably from 5 to 20 hours.

Carrying out this drying step in a nitrogen or other inert gas atmosphere or under a reduced pressure of 700 Pa or less is desirable for suppressing deterioration of the product.

The weight-average molecular weight of the polyurea polymer of the invention, although not particularly limited, is preferably from 4,000 to 800,000, more preferably from 50,000 to 800,000, and even more preferably from 50,000 to 600,000. The weight-average molecular weight is a value determined by gel permeation chromatography (GPC) relative to a polymethyl methacrylate standard.

In the polyurea polymer of the invention, the Shore A hardness measured under the following conditions is preferably 85 or below, more preferably 80 or below, and even more preferably 75 or below.

The compression set at 100°C determined under the conditions described below is preferably 55% or less, more preferably 50% or less, and even more preferably 45% or less.

Because the polyurea polymer of the invention has the above Shore A hardness and compression set, it is suitable particularly in sealing material applications.

[Method for Measuring Hardness]

A 2 mm thick sheet was fabricated by pressing and melt-molding the polyurea polymer of the invention at a given temperature, following which it was left to stand at 25°C for two or more days. Three layers of the resulting sheet were stacked, and the hardness was measured with a Shore A durometer.

[Method for Measuring Compression Set]

(1) The polyurea polymer of the invention is press molded in a 50 mm × 50 mm × 6 mm (thick) mold, cut out to a size of 10 mm × 10 mm, and annealed at 100°C for 16 hours.

(2) The polymer annealed in (1) is compressed to a thickness of 3.9 mm and heated at 100°C for 22 hours.

(3) Following compression under heating, the polymer is cooled to room temperature, after which the compression is released, the thickness is measured and the compression set is calculated from the following formula.

$$\text{Compression Set (\%)} = [1 - (\text{thickness after recovery} - 3.9)/(\text{initial thickness} - 3.9)] \times 100$$

[3] Polyurea Composition

The polyurea composition of the invention includes (A) the above polyurea polymer, and (B) an alcohol having one secondary hydroxyl group or tertiary hydroxyl group per molecule.

[Component (A)]

Component (A) is the above polyurea polymer. This is included in an amount of preferably from 10 to 50 wt%, and more preferably from 20 to 40 wt%, of the composition.

[Component (B)]

Component (B) used in this invention is an alcohol having one secondary hydroxyl group or tertiary hydroxyl group per molecule, and can be used as a diluting solvent in the polyurea composition of the invention.

Component (B) is not particularly limited, provided that it has one secondary hydroxyl group or tertiary hydroxyl group per molecule. Examples include the same compounds as the solvent used in preparing the above-described polyurea polymer of the invention.

The component (B) content per 100 parts by weight of the polyurea polymer (A) is preferably at least 10 parts by weight, more preferably at least 40 parts by weight, even more preferably at least 100 parts by weight, and still more preferably at least 200 parts by weight. At too low a content, it may be immiscible with the polyurea polymer. Although there is no particular upper limit, the content is preferably not more than 300 parts by weight, and more preferably not more than 250 parts by weight.

[Other Ingredients]

Ingredients other than components (A) and (B) may be included in the inventive composition within ranges that do not detract from the advantageous effects of the invention. Examples of such other ingredients include antioxidants, ultraviolet absorbers, light stabilizers and solvents other than component (B).

Specific examples of antioxidants include hindered phenol-type antioxidants, amine-type antioxidants, phosphorus-containing antioxidants and sulfur-containing antioxidants.

Specific examples of ultraviolet absorbers include benzotriazole-type ultraviolet absorbers, triazine-type ultraviolet absorbers, benzophenone-type ultraviolet absorbers and benzoate-type ultraviolet absorbers.

Specific examples of light stabilizers include hindered amine-type light stabilizers.

Specific examples of solvents include solvents other than component (B), such as toluene, xylene, benzene, hexane, cyclohexane, methyl cyclohexane, ethyl cyclohexane, tetrahydrofuran (THF), diethyl ether, acetone, methyl ethyl ketone, acetonitrile, ethyl acetate and butyl acetate.

[4] Method for Preparing Polyurea Composition

The method for preparing the polyurea composition of the invention is not particularly limited. The polyurea composition can be obtained by mixing together above components (A) and (B) and, where necessary, other ingredients by a conventional process. Addition of the other ingredients to components (A) and (B) may be timed in any way.

Alternatively, following the reaction of components (a) to (c) in the alcohol of component (B) and synthesis of the polyurea polymer of component (A), the polyurea composition can be obtained directly upon reaction completion as a solution of the polyurea polymer of component (A) dissolved in the alcohol of component (B).

The polyurea composition of the invention, owing to this formulation, forms a resin or elastomer having thermoplasticity. However, by using an alcohol having a functionality of three or more, it can also be rendered into a thermosetting composition.

A known method may be used without particular limitation to mold the polyurea composition of the invention. For example, the composition may be cut into pellets in a twin-screw extruder and subsequently processed into molded or formed product by various commonly used molding or forming machines, such as an extruder, injection molding machine, calendaring machine or press.

The polyurea composition of the invention can be suitably used either in a liquid state in which the polyurea polymer (A) is dissolved in component (B) or in a liquid state of two, three or more liquids in which the prepolymer and the chain extender are separated, and as a primer coating agent or top coating agent for various plastics such as polyester, nylon, polyvinyl chloride, ABS, OPP and CPP. Moreover, it can be used as various types of fibers, including elastomeric fibers; as a paint, surface coating material or sealant for knit and woven fabrics composed of various fibers, nonwoven fabrics, paper, natural leather, artificial leather, synthetic leather and wood; and in rollers for office equipment, shoes, ski boots, adhesives, sealing materials, wood binders, thermoplastic elastomers and thermoset elastomers.

## EXAMPLES

Examples of the invention and Comparative Examples are given below by way of illustration, although the

invention is not limited by these Examples.

The compounds used were as follows.

Regarding component (a), components (a-1) to (a-4) and (a-6), (a'-7) and (a'-8) are compounds for which, in formula (1), $R^1$ is $-CH_2CH_2CH_2NH_2$, $R^2$ is $-CH_3$ and n is a value that agrees with the respective amine equivalent weights.

Component (a-5) is an organopolysiloxane of the following formula.

[Chem. 4]

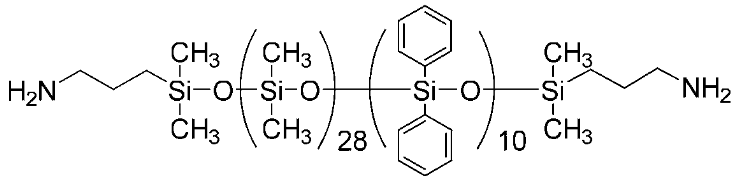

(wherein the siloxane units may be bonded as blocks or randomly).

The method for measuring the amine equivalent weight was as follows.

[Method for Measuring Amine Equivalent Weight]

Measurement was carried out under the following conditions with the COM-1750 automatic titrator (Hiranuma Co., Ltd.) and using the GR-511B glass reference combination electrode.

The sample was weighed out in a beaker, 25 mL each of toluene and IPA were added and stirred, and neutralization titration was carried out with 0.1 N hydrochloric acid.

Component (A)

• Component (a)

| | |
|---|---|
| (a-1) | amine equivalent weight, 2,030 g/mol |
| (a-2) | amine equivalent weight, 2,140 g/mol |
| (a-3) | amine equivalent weight, 2,160 g/mol |
| (a-4) | amine equivalent weight, 5,440 g/mol |
| (a-5) | amine equivalent weight, 2,160 g/mol |
| (a-6) | amine equivalent weight, 2,070 g/mol |
| (a'-7) | amine equivalent weight, 770 g/mol |
| (a'-8) | amine equivalent weight, 1,480 g/mol |

• Component (b)

| | |
|---|---|
| H-MDI: | 4,4'-Dichlorohexylmethane diisocyanate (isomer mixture) |
| IPDI: | Isophorone diisocyanate (isomer mixture) |

• Component (c)

| | |
|---|---|
| IPDA: | Isophorone diamine (cis- and trans- mixture) |
| MDA: | 4,4'-Methylenedianiline |

(continued)

| | |
|---|---|
| DDDA: | 1,12-Dodecanediamine |
| DDA: | 1,10-Decanediamine |
| TMHMDA: | Trimethylhexamethylenediamine (2,2,4- and 2,4,4- mixture) |
| ODA: | 1,8-Octanediamine |
| H-MDA: | 4,4'-Diaminodicyclohexylmethane (isomer mixture) |
| PRZ: | Piperazine |
| HDA: | 1,6-Hexanediamine |

Component (B)

IPA: Isopropyl alcohol

[1] Preparation of Polyurea Polymers and Evaluation of Their Properties

[Example 1-1]

After mixing together 85 parts by weight of (a-1) and 233.33 parts by weight of IPA, 11.34 parts by weight of H-MDI was added at 20°C and reacted for one hour. Next, 8.65 parts by weight of IPDA was added at 20°C and reacted for 12 hours.

The reaction mixture was transferred to a polytetrafluoroethylene vat and dried for 12 hours at room temperature, following which it was desiccated for 5 hours at 1 mmHg in a 120°C vacuum desiccator, giving a mass.

[Measurement of Weight-Average Molecular Weight]

The weight-average molecular weight of the resulting polyurea polymer (mass) was a value determined by gel permeation chromatography (GPC) relative to a polymethyl methacrylate standard.

[Measurement Conditions]

| | |
|---|---|
| Apparatus: | HLC-8320 GPC (Tosoh Corporation) |
| Developing solvent: | hexafluoro-2-propanol (HFIP) to which 5 mM of sodium trifluoroacetate has been added |
| Flow rate: | 0.2 mL/min |
| Detector: | refractive index detector (RI) |
| Columns: | two TSK Guardcolumn SuperH-L TSKgel SuperHM-N (4.6 mm I.D. × 15 cm) columns (both from Tosoh Corporation) |
| Column temperature: | 40°C |
| Amount of sample injected: | 50 μL (as 0.5 wt% solution in developing solvent) |

[Measurement of Tensile Strength and Elongation at Break]

The resulting mass was pressed at 210°C for 10 minutes under a pressure of 10 MPa, giving a 1 mm thick cured sheet. Number 6 dumbbell specimens (JIS K7312: 1996) were die-cut from this sheet, and the tensile strength and elongation at break were measured at a test rate of 100 mm/min.

[Measurement of Hardness]

The resulting mass was pressed and melt-molded at the temperature indicated in Table 2, giving a 2 mm thick sheet, following which this was left at rest for 2 days at 25°C. Three layers of the resulting sheet were stacked, and the

hardness was measured with a Shore A durometer.

[Measurement of Compression Set]

The resulting mass was pressed in a 50 mm × 50 mm × 6 mm (thick) mold, cut up into 10 mm × 10 mm × 6 mm (thick) pieces and annealed at 100°C for 16 hours. These were compressed to a thickness of 3.9 mm, heated at 100°C for 22 hours and subsequently cooled to room temperature. The thickness upon releasing the compression was measured, and the compression set was calculated. The compression set was calculated from the following formula.

$$\text{Compression Set (\%)} = [1 - (\text{thickness after recovery} - 3.9)/(\text{initial thickness} - 3.9)] \times 100$$

The formulation is shown in Table 1, and the evaluation results are presented in Table 2.

[Examples 1-2 to 1-14]

Masses for Examples 1-2 to 1-14 were obtained by carrying out the same procedure as in Example 1-1. The properties of the resulting masses were evaluated in the same way as in Example 1-1.

The amount of IPA used was the same as in Example 1-1. The formulations are shown in Table 1 and the evaluation results are presented in Table 2.

[Comparative Examples 1-1 and 1-2]

Masses for Comparative Examples 1-1 and 1-2 were obtained by carrying out the same procedure as in Example 1-1.

The amount of IPA used was the same as in Example 1-1. The formulations are shown in Table 1, and the evaluation results are presented in Table 2.

[Table 1]

| Formulation | | Component (a) | | | Component (b) | | | Component (c) | | | Component (A) |
|---|---|---|---|---|---|---|---|---|---|---|---|
| | | (a) | pbw | Number of equivalents | Name of ingredient | pbw | Number of equivalents | Name of ingredient | pbw | Number of equivalents | Weight-average molecular weight |
| Example | 1-1 | a-1 | 85 | 0.485 | H-MDI | 11.34 | 1.00 | IPDA | 8.65 | 0.495 | 95,100 |
| | 1-2 | a-2 | 80 | 0.348 | H-MDI | 14.17 | 1.00 | IPDA | 5.83 | 0.632 | 176,000 |
| | 1-3 | a-3 | 80 | 0.358 | H-MDI | 13.6 | 1.00 | MDA | 6.40 | 0.623 | 199,400 |
| | 1-4 | a-3 | 80 | 0.358 | H-MDI | 13.56 | 1.00 | DDDA | 6.44 | 0.623 | 69,400 |
| | 1-5 | a-3 | 80 | 0.343 | H-MDI | 14.11 | 1.00 | DDA | 5.89 | 0.637 | 184,000 |
| | 1-6 | a-3 | 80 | 0.338 | H-MDI | 14.41 | 1.00 | TMHMDA | 5.59 | 0.642 | 187,000 |
| | 1-7 | a-3 | 80 | 0.328 | H-MDI | 14.73 | 1.00 | ODA | 5.27 | 0.652 | 224,000 |
| | 1-8 | a-3 | 80 | 0.363 | H-MDI | 13.38 | 1.00 | H-MDA | 6.62 | 0.618 | 183,000 |
| | 1-9 | a-2 | 80 | 0.299 | H-MDI | 16.35 | 1.00 | PRZ | 3.65 | 0.681 | 90,600 |
| | 1-10 | a-2 | 80 | 0.319 | H-MDI | 15.46 | 1.00 | HDA | 4.54 | 0.735 | 242,000 |
| | 1-11 | a-4 | 80 | 0.147 | H-MDI | 12.99 | 1.00 | IPDA | 7.01 | 0.833 | 290,000 |
| | 1-12 | a-4 | 90 | 0.314 | H-MDI | 6.97 | 1.00 | IPDA | 3.03 | 0.672 | 544,000 |
| | 1-13 | a-5 | 80 | 0.343 | H-MDI | 14.15 | 1.00 | IPDA | 5.85 | 0.637 | 4,540 |
| | 1-14 | a-6 | 80 | 0.324 | IPDI | 13.3 | 1.00 | IPDA | 6.7 | 0.657 | 99,000 |
| Comparative Example | 1-1 | a'-7 | 80 | 0.775 | H-MDI | 17.63 | 1.00 | IPDA | 2.37 | 0.206 | 47,300 |
| | 1-2 | a'-8 | 90 | 0.863 | H-MDI | 9.27 | 1.00 | IPDA | 0.72 | 0.123 | 27,100 |

[Table 2]

| | | Physical properties | | | | |
|---|---|---|---|---|---|---|
| | | Tensile strength (MPa) | Elongation at break (%) | Hardness | | Compression Set (%) |
| | | | | **Pressing** temperature (°C) | Shore A | 100°C |
| Example | 1-1 | 5.4 | 280 | 230 | 55 | 39 |
| | 1-2 | 7.8 | 210 | 225 | 55 | 22 |
| | 1-3 | 5.3 | 270 | 220 | 49 | 48 |
| | 1-4 | 9.0 | 370 | 225 | 62 | 45 |
| | 1-5 | 8.3 | 360 | 225 | 60 | 45 |
| | 1-6 | 5.4 | 320 | 225 | 45 | 45 |
| | 1-7 | 6.8 | 340 | 225 | 57 | 40 |
| | 1-8 | 4.2 | 170 | 230 | 55 | 35 |
| | 1-9 | 3.6 | 50 | 230 | 72 | 30 |
| | 1-10 | 4.5 | 190 | 235 | 50 | 26 |
| | 1-11 | 3.3 | 160 | 230 | 47 | 25 |
| | 1-12 | 1.3 | 160 | 225 | 31 | 25 |
| | 1-13 | 6.9 | 120 | 225 | 75 | 35 |
| | 1-14 | 3.8 | 130 | 235 | 63 | 41 |
| Comparative Example | 1-1 | 15 | 290 | 235 | 90 | 55 |
| | 1-2 | 2.2 | 190 | 205 | 51 | 103 |

As shown in Table 2, the polyurea polymers of Examples 1-1 to 1-14 had Shore A hardnesses of 75 or less and compression sets at 100°C of less than 50%.

[2] Preparation of Polyurea Composition

[Example 2-1]

After mixing together 85 parts by weight of (a-1) and 233.33 parts by weight of IPA, 11.34 parts by weight of H-MDI was added at 20°C and reacted for 1 hour. Next, 8.65 parts by weight of IPDA was added at 20°C and reacted for 12 hours, synthesizing a polyurea polymer. Following reaction completion, a polyurea composition was obtained as a solution of the polyurea polymer dissolved in IPA.

[Examples 2-2 to 2-14]

The same procedure was carried out as in Example 2-1, giving the polyurea compositions in Examples 2-2 to 2-14 as solutions of the respective polyurea polymers dissolved in IPA. The formulations were the same as the respective formulations in Examples 1-2 to 1-14. The amount of IPA used in each case was the same as in Example 2-1.

[Comparative Examples 2-1 and 2-2]

The same procedure was carried out as in Example 2-1, giving polyurea compositions for Comparative Examples 2-1 and 2-2 as solutions of the respective polyurea polymers dissolved in IPA. The formulations were the same as the respective formulations in Comparative Examples 1-1 and 1-2. The amount of IPA used was the same as in Example 2-1.

[Example 2-15]

After mixing together 85 parts by weight of (a-1) and 233.33 parts by weight of IPA, 11.34 parts by weight of H-MDI was added at 20°C and reacted for 1 hour. Next, 8.65 parts by weight of IPDA was added at 20°C and reacted for 12 hours.

The reaction mixture was transferred to a polytetrafluoroethylene vat and dried at room temperature for 12 hours, then desiccated at 1 mmHg for 5 hours in a 120°C vacuum desiccator, giving a mass.

A polyurea composition was obtained by adding 70 parts by weight of IPA to 30 parts by weight of the resulting mass, re-dissolving the mass.

## Claims

1. A polyurea polymer that is a reaction product of:

   (a) an amino group-containing organopolysiloxane of general formula (1) below which has an amine equivalent weight of more than 1,500 g/mol and up to 7,500 g/mol

   [Chem. 1]

   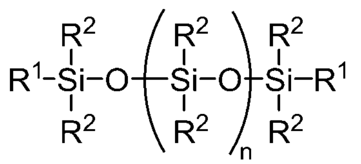

   (1)

   (wherein each $R^1$ is independently a monovalent hydrocarbon group of 1 to 20 carbon atoms which has a primary or secondary amino group, each $R^2$ is independently a monovalent hydrocarbon group of 1 to 20 carbon atoms, n is a value that satisfies the amine equivalent weight, and the siloxane units within parentheses may be bonded in any order),
   (b) an aliphatic diisocyanate compound having two isocyanate groups per molecule, and
   (c) an amine compound having two or more amino groups per molecule (exclusive of component (a)).

2. The polyurea polymer of claim 1, wherein component (c) is a compound of formula (4) below

   $$H_2N\text{-}R\text{-}NH_2 \qquad (4)$$

   (wherein R is a substituted or unsubstituted divalent hydrocarbon group of 1 to 20 carbon atoms).

3. A method for preparing the polyurea polymer of claim 1 or 2, comprising the step of reacting components (a) to (c) in an alcohol having one secondary hydroxyl group or tertiary hydroxyl group per molecule to form a polyurea polymer.

4. A polyurea composition comprising:

   (A) the polyurea polymer of claim 1 or 2, and
   (B) an alcohol having one secondary hydroxyl group or tertiary hydroxyl group per molecule.

5. The polyurea composition of claim 4, wherein the composition is a solution of the polyurea polymer of component (A) dissolved in the alcohol of component (B).

6. A method for preparing the polyurea composition of claim 5, comprising the step of reacting components (a) to (c) in the alcohol of component (B) to synthesize the polyurea polymer of component (A), thereby obtaining a polyurea composition which is a solution of the polyurea polymer of component (A) dissolved in the alcohol of component (B).

**INTERNATIONAL SEARCH REPORT**

International application No.
**PCT/JP2024/014510**

**A. CLASSIFICATION OF SUBJECT MATTER**

***C08G 18/65***(2006.01)i; ***C08G 18/32***(2006.01)i; ***C08G 18/61***(2006.01)i; ***C08G 18/73***(2006.01)i; ***C08G 18/75***(2006.01)i
FI: C08G18/65 023; C08G18/32 025; C08G18/61; C08G18/73; C08G18/75

According to International Patent Classification (IPC) or to both national classification and IPC

**B. FIELDS SEARCHED**

Minimum documentation searched (classification system followed by classification symbols)

C08G18/65; C08G18/32; C08G18/61; C08G18/73; C08G18/75

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-513197 A (3M INNOVATIVE PROPERTIES COMPANY) 12 May 2005 (2005-05-12)<br>examples 15-17 | 1-6 |
| X | JP 11-502560 A (MINNESOTA MINING AND MANUFACTURING COMPANY) 02 March 1999 (1999-03-02)<br>example 18 | 1-6 |
| X | US 2006/0047083 A1 (YILGOR, Iskender) 02 March 2006 (2006-03-02)<br>example 3 | 1-6 |
| X | CN 108610466 A (SHANDONG UNIVERSITY) 02 October 2018 (2018-10-02)<br>example 1 | 1-6 |
| X | JP 11-504372 A (MINNESOTA MINING AND MANUFACTURING COMPANY) 20 April 1999 (1999-04-20)<br>example 58 | 1-2 |
| A | | 3-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/014510**

**C. DOCUMENTS CONSIDERED TO BE RELEVANT**

| Category* | Citation of document, with indication, where appropriate, of the relevant passages | Relevant to claim No. |
|---|---|---|
| X | JP 11-504373 A (MINNESOTA MINING AND MANUFACTURING CO.) 20 April 1999 (1999-04-20) examples 94, 95 | 1–2 |
| A | | 3–6 |
| X | JP 11-240935 A (DAINICHISEIKA COLOR & CHEMICALS MFG. CO., LTD.) 07 September 1999 (1999-09-07) example 2 | 1–2 |
| A | | 3–6 |
| X | JP 2002-037842 A (DAINICHISEIKA COLOR & CHEMICALS MFG. CO., LTD.) 06 February 2002 (2002-02-06) example 2 | 1–2 |
| A | | 3–6 |
| X | WO 2014/129478 A1 (DAINICHISEIKA COLOR & CHEMICALS MFG. CO., LTD.) 28 August 2014 (2014-08-28) manufacturing example 2-2 | 1–2 |
| A | | 3–6 |
| X | JP 2014-209229 A (TOYOBO CO., LTD.) 06 November 2014 (2014-11-06) example 1 | 1–2 |
| A | | 3–6 |

Form PCT/ISA/210 (second sheet) (July 2022)

**INTERNATIONAL SEARCH REPORT**
**Information on patent family members**

International application No.
**PCT/JP2024/014510**

| Patent document cited in search report | Publication date (day/month/year) | Patent family member(s) | Publication date (day/month/year) |
|---|---|---|---|
| JP 2005-513197 A | 12 May 2005 | US 2003/0165676 A1<br>examples 15-17<br>WO 2003/052021 A1<br>EP 1458833 A1 | |
| JP 11-502560 A | 02 March 1999 | US 5670598 A<br>example 18<br>WO 1996/030426 A1<br>EP 815154 A1<br>KR 10-1998-0703183 A | |
| US 2006/0047083 A1 | 02 March 2006 | (Family: none) | |
| CN 108610466 A | 02 October 2018 | (Family: none) | |
| JP 11-504372 A | 20 April 1999 | US 6355759 B1<br>example 58<br>EP 822951 A1<br>CN 1181764 A<br>KR 10-1999-0007794 A | |
| JP 11-504373 A | 20 April 1999 | US 2001/0037008 A1<br>examples 94, 95<br>WO 1996/034030 A1<br>EP 822952 A1<br>CN 1186505 A<br>KR 10-1999-0008021 A | |
| JP 11-240935 A | 07 September 1999 | US 6143419 A<br>example 2<br>EP 925955 A1<br>TW 401349 B<br>CN 1220949 A<br>KR 10-1999-0062421 A | |
| JP 2002-037842 A | 06 February 2002 | (Family: none) | |
| WO 2014/129478 A1 | 28 August 2014 | US 2015/0318064 A1<br>manufacturing example 2-2<br>EP 2960907 A1<br>CN 105009223 A<br>KR 10-2015-0122182 A | |
| JP 2014-209229 A | 06 November 2014 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016158967 A1
- JP S633029 A